# EUROPÄISCHE PATENTSCHRIFT

(11) **EP 2 030 734 B1**
(45) Veröffentlichungstag und Bekanntmachung des Hinweises auf die Patenterteilung: **06.04.2011**
(21) Anmeldenummer: 08014488.4
(22) Anmeldetag: 14.08.2008
(51) Int. Cl.: B25B 1/08, B25B 1/18, B25B 1/24, B23Q 3/06

(54) **Hydraulisches Spannbackensystem**
Hydraulic clamping jaws system
Système de mâchoire de serrage hydraulique

(30) Priorität: 31.08.2007 DE 202007012219 U
(43) Veröffentlichungstag der Anmeldung: 04.03.2009
(73) Patentinhaber: HOHENSTEIN Vorrichtungsbau und Spannsysteme GmbH, 09337 Hohenstein-Ernstthal (DE)
(72) Erfinder: Franzki, Michael, 78166 Donaueschingen (DE)
(74) Vertreter: Grosse, Ulrich

(56) Entgegenhaltungen:
- DE-A1- 3 340 765
- DE-A1- 19 507 676
- DE-U1-202006 009 437
- FR-A- 2 689 797

## Beschreibung

Die Erfindung geht von dem Oberbegriff des Patentanspruches 1 definierten Hydraulischen Spannbackensystems für eine gleichzeitige Mehrteilespannung gleicher Werkstücke aus.

Artgleich den Maschinenschraubstöcken sind auf einem Grund- oder Basiskörper zwei Spannbacken längsgerichtet einstellbar und in Spannstellung der Werkstücke fest angeordnet, zwischen denen zusätzlich jeweils mindestens ein Zwischenbacken ebenfalls nach Längseinstellung auf den Grund- oder Basiskörper in der gewollten Werkstück-Spannstellung manuell fest klemmbar und lösbar ist.

Dieser Stand der Technik ist beispielhaft in DE 195 45 475 A1 beschrieben, wobei die zwischen den beiden beweglichen Hauptspannbacken des Werkstückspannmittels eingesetzten Zwischenbacken im wesentlichen ebenso wie diese ausgebildet, dimensioniert und auf dem Schraübstock-Grundkörper quer zur Spannrichtung fixierbar sind.

Die Spannung der Werkstücke geht aktiv von mindestens einem der beiden beweglichen Hauptspannbacken auf dem Schraubstock aus, während der oder die Zwischenbacken nur passiv zur Anlage und Positionierung der Werkstücke genutzt sind.

Alternativ zu dieser Art der Zwischenbacken-Anwendung in manuell spannenden Maschinenschraubstöcken und Spannbacken-System ist aus DE 20 2006 009 437 U1 ein modulares vom Bediener manuell spann- und entspannbares Spannbacken-System bekannt, zu dessen Sortiment modularer Bauteile ein, zwischen festen und beweglichen Spannbacken als aktives Werkstück-Spannelement einsetzbarer, Zwischenbacken gehört.

Dieser Zwischenbacken ist als Doppelkeil an dem beweglichen Keilbacken anliegend, ausgebildet, wobei die an den festen Spannbacken anliegenden Werkstücke über Stell- und Spannschrauben manuell gespannt oder entspannt sind.

Eine aus DE 3340765 A1 bekannte Befestigungsklemme ist ebenfalls als ein Zwischenbacken ausgebildet, der im Wesentlichen aus einem Doppelkeil besteht an dem bewegliche Keilbacken anliegen und die Werkstücke aktiv spannen.

Die ausgeübte Spannkraft, die von den Keilbacken ausgehend auf die an den Spannbacken anliegenden Werkstücke wirkt, ist dimensionsabhängig geringer als bei Schraubstock- und Spannbackensystemen, die mittels Hydraulik-Druckmedium spannen.

Hydraulisch spannende Maschinenschraubstöcke und hydraulisch wirkende Spannbacken sind Stand der Technik.

Beispielhaft sind diese aus DE 101 46 077 A1 und DE 10 2004 056 827 A1 bekannt.

Die Hydraulik-Spannzylinder sind unter den beiden Spannbacken, im Grund- oder Basiskörper des Maschinenschraubstockes liegend, parallel zur Spann- und Entspannbewegung der Spannbacken angeordnet.

Über mechanische Adapterelemente ist die Kolbenbewegung des Hydraulik-Spannzylinders auf den oder die beweglichen Spannbacken übertragbar. Alternativ ist der Hydraulik-Spannzylinder auf den oder die beweglichen Spannbacken direkt angeordnet. Eine hydraulische Spannung an Zwischenbacken zwischen den beiden Spannbacken angeordnet, ist als Stand der Technik an Maschinenschraubstöcken und Spannbacken-Systemen nicht bekannt.

Nachteilig ist an diesen hier beispielhaft genannten Lösungen, dass
- die Zwischenbacken auf Maschinen-Schraubstöcken und Spannbacken-Systemen nur als einstellbare Werkstück-Anlageelemente ergänzend zur Anwendung kommen
- die Zwischenbacken als manuell betätigte Elemente nur geringe Spannkräfte ausüben können
und
- die durch die Hydraulik-Spannzylinder bedingte großräumige sowie kompakte Bauweise von Grund- und Basiskörpern sowie der hydraulischen Spannbacken.

Der im Patentanspruch 1 angegebenen Erfindung liegt das Problem zu Grunde, ein Hydraulisches Spannbackensystem so auszubilden, dass die hydraulischen Spannkomponenten die mit entgegengerichtet beweglichen Keilbacken ausgestatteten Zwischenbacken als aktive Werkstück-Spannelemente mit hoher gleicher sowie gleichbleibender Spannkraft für eine stabile Niederzugspannung von jeweils zwei Werkstücken ausgebildet sind. Die Anordnung der hydraulischen Spannkomponenten soll raumsparend in Grund- oder Basiskörpern möglich sein.

Das Problem wird mit einem hydraulischen Spannbackensystem mit den Merkmalen des Patentanspruchs 1 gelöst.

Das entwickelte Hydraulische Spannbackensystem ist so konzipiert, dass jeder der Hydraulik-Spannzylinder im wesentlichen einstückig, aus Kolben und Kolbenstange bestehend, ausgebildet und in einer Zylinderbohrung eines Basiskörpers, senkrecht und druckdicht zwischen Endstellungen beweglich, Druckkammern bildend, aufgenommen ist.

Die Druckkammern sind dann an den oberen Kolbenstirnseiten über quer im Basiskörper verlaufende Druckkammer-Ölbohrungen miteinander leitungs- und funktionsverbunden, wenn sich die Koiben in einer unteren gespannten Stellung befinden.

In der oberen Stellung des Hydraulik-Spannzylinders ist der Doppel-Spannkeil angehoben entspannt und die beweglichen Keilbacken sind von den Werkstücken gelöst.

Der Doppel-Spannkeil ist mittels einer Klemmschraube, senkrecht zum Verlauf der Spann- und Entspannbewegungen der beweglichen Keilbacken gerichtet, in der beweglichen Kolbenstange des Hydraulik-Spannzylinders achsial verschraubt.

Weitere Ausgestaltungen der Erfindung sind in den Patentansprüchen 2 und 3 angegeben.

Sie betreffen
- Ausbildungsvarianten des Basiskörpers für werkstückspezifische Werkstückspannungen auf Vorrichtungen und die
- Koordinierte Beweglichkeit der Keilbacken am Zwischenbacken

Die Erfindung ist in zwei Ausführungsbeispielen in den Figuren dargestellt und im folgenden Teil der Beschreibung näher erläutert:
- Fig. 1:: eine Ansicht einer Spannvorrichtung mit einer Zwischenbacke in Spannstellung
- Fig. 2:: eine Schnittdarstellung A-A nach Fig. 1
- Fig. 3:: eine Ansicht einer Spannvorrichtung mit zwei Zwischenbacken in Entspannstellung

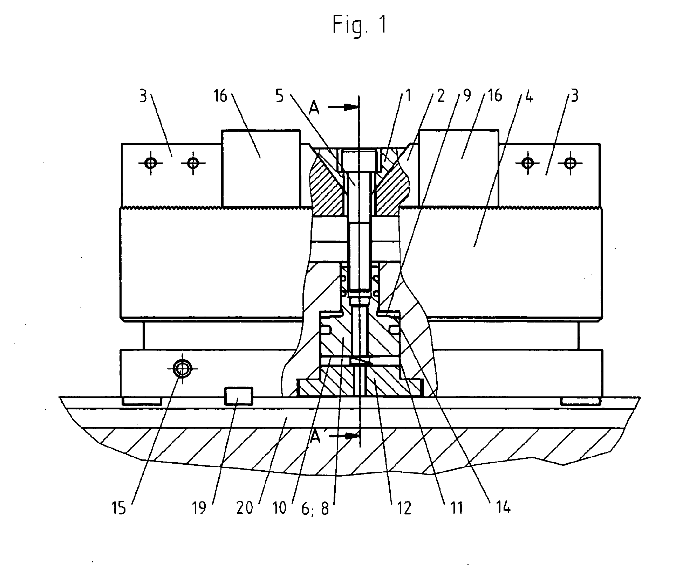

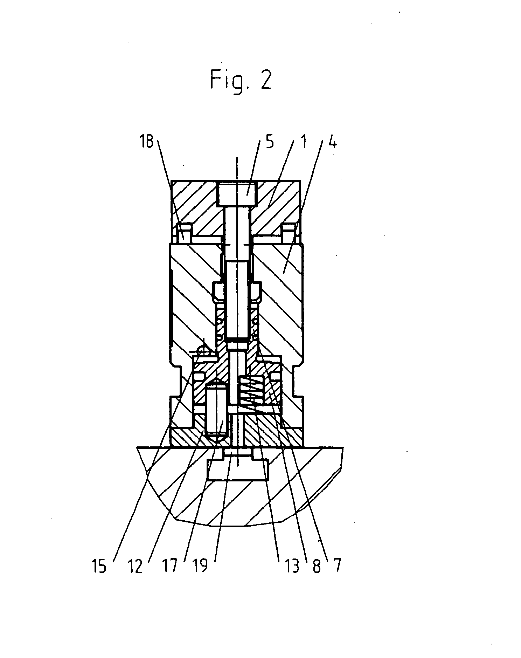

Die in Fig. 1 und Fig. 2 dargestellte hydraulische Spannvorrichtung besteht im Wesentlichen aus dem Basiskörper 4, in dem der aus einem Kolben 8 und der Kolbenstange 7 bestehende Hydraulikspannzylinder 6 in den senkrecht zur Spann- und Entspann-Richtung angeordneten Zylinderbohrung 11 aufgenommen ist, den zwei festen Spannbacken 3 und der als Doppel-Spannkeil 1 und den anliegenden bewegliche Keilbacken 2 bestehenden Zwischenbacke. In der Spannstellung ist der Doppel-Spannkeil 1 über die Klemmschraube 5 von dem Kolben 8 mit der unteren Kolbenstirnseite 10 aufliegend, und der Kolbenstange 7 des Hydraulik-Spannzylinder 6 in einer unteren Stellung. Dabei sind die zwei flächig an den Keilflächen des Doppel-Spannkeiles 1 anliegenden beweglichen Keilbacken 2 in die Spannstellung gebracht. Die zwei Werkstücke 16 sind an den festen Spannbacken 3 flächig anliegend gespannt.

Die im Basiskörper 4, in der Zylinderbohrung 11 an der oberen Kolbenstirnseite 9 des sich in der unteren Spannstellung befindlichen Kolbens 8 gebildete Druckkammer 14 ist über die Druckkammer-Ölbohrung 15 über Außenleitungen mit der nicht dargestellten Hydraulik-Druckpumpe leitungsverbunden.

Nach der Umsteuerung in die Entspannstellung leert sich die Druckkammer 14 und der Kolben 8 wird durch die Druckfeder 13 gegenüber den an der Unterseite des Basiskörpers 4 angeordneten Unterseitendeckel 12 angehoben. Dabei sichert der Positionierstift 17 die Position von Kolben 8, Kolbenstange 7 und Doppel-Spannkeil 1 gegen ungewollte Verdrehungen ab.

Mittels der an den Unterseiten der zwei beweglichen Keilbacken 2 angeordneten Zugfedern 18 sind diese miteinander verbunden und kontaktieren flächig den Doppel-Spannkeil 1 in dessen oberen Entspannstellung und unteren Spannstellung. Der als prismatischer Aufspannkörper ausgebildete Basiskörper 4 ist mittels Positionierstücken 19 in entsprechend dimensionierten Bohrungen und Nuten im Werkzeugmaschinentisch 20 positioniert und in nicht dargestellter Weise befestigt.

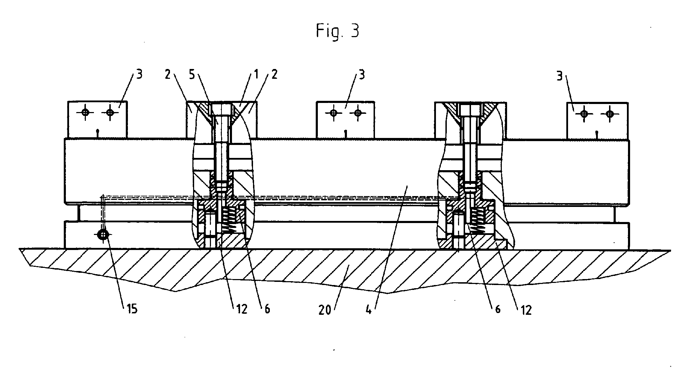

Die in Fig. 3 dargestellte hydraulische Spannvorrichtung besteht aus einem Basiskörper 4 längerer Dimensionierung. Die zwei Zwischenbacken, ihre Doppel-Spannkeile 1 und die beweglichen Keilbacken 2 befinden sich in Entspannstellung. Die Kolben 8 und die Kolbenstangen 7 der Hydraulik-Spannzylinder 6 befinden sich gegenüber den Unterseitendeckeln in der oberen Endstellung. Die entleerten Druckkammern sind über die Druckkammern-Ölbohrungen 15 miteinander und mit einem nicht dargestellten Druckerzeuger leitungsverbunden.

Mittels der zwei Zwischenbacken können gleichzeitig vier Werkstücke an den drei, auf dem Basiskörper 4 befestigten, festen Spannbacken 3 anliegend gespannt werden.

### Bezugszeichenliste

- 1: Doppel-Spannkeil
- 2: bewegliche Keilbacke(n)
- 3: feste Spannbacke(n)
- 4: Basiskörper
- 5: Klemmschraube (für Doppel-Spannkeil)
- 6: Hydraulik-Spannzylinder
- 7: Kolbenstange
- 8: Kolben
- 9: obere Kolbenstirnseite
- 10: untere Kolbenstirnseite
- 11: Zylinderbohrung(en) (für Hydraulik-Spannzylinder in Basiskörper)
- 12: Unterseitendeckel (am Basiskörper)
- 13: Druckfeder
- 14: Druckkammer(n)
- 15: Druckkammer-Ölbohrungen (im Basiskörper)
- 16: Werkstücke
- 17: Positionierstift
- 18: Zugfedern (am Doppel-Spannkeil)
- 19: Positionierstücke
- 20: Werkzeugmaschinentisch

## Patentansprüche

1. Hydraulisches Spannbackensystem für eine gleichzeitige Mehrteilespannung gleicher Werkstücke zwischen zwei Spannbacken und mindestens einem Zwischen-Spannbacken, schraubstockartig auf Basiskörpern angeordnet wobei ein als Doppel-Spannkeil (1) mit zwei beweglichen Keilbacken (2) ausgebildeter Zwischen-Spannbacken in einer konstanten Mittenposition zwischen festen Spannbacken (3) auf einem Basiskörper (4) justiert und gehalten ist **dadurch gekennzeichnet, dass** der Doppel-Spannkeil (1) mittels einer Klemmschraube (5), senkrecht zum Verlauf der Spann- und Entspannbewegungen der beweglichen Keilbacken (2) gerichtet, in der beweglichen Kolbenstange (7) des Hydraulik-Spannzylinders (6) achsial verschraubt und mit diesen Wertkstücke gespannt oder entspannt sind,
dass jeder der Hydraulik-Spannzylinder (6) im Wesentlichen einstückig, aus Kolben (8) und Kolbenstange (7) bestehend ausgebildet und in einer Zylinderbohrung (11) des Basiskörpers (4), senkrecht und druckdicht zwischen Endstellungen beweglich, Druckkammern bildend, aufgenommen ist und
dass die Druckkammern (14) an den oberen Kolbenstirnseiten (9) über quer im Basiskörper (4) verlaufende Druckkammer-Ölbohrungen (15) miteinander leitungs- und funktionsverbunden sind, wenn sich die Kolben (8) in einer unteren gespannten Stellung befinden und
dass in der oberen Stellung des Hydraulik-Spannzylinders (6) der Doppel-Spannkeil (1) angehoben entspannt und die beweglichen Keilbacken (2) von den Werkstücken (16) gelöst sind und
dass der Kolben (8) und die Kolbenstange (7) an der unteren Kolbenstirnseite (10) mittels Positionierstift (17) und Druckfeder (13) gegenüber einem festen Unterseitendeckel (12) am Basiskörper (4) verdrehgesichert und federnd abgestützt sind.

2. Hydraulisches Spannbackensystem nach Anspruch 1 **dadurch gekennzeichnet, dass** der Basiskörper (4) wahlweise als
- Spannleiste für die Halterung der Spannbacken in der Zwischen-Spannbacke
- prismatischer Aufspannkörper
- Adapter-Körper an Spann- und Schwenkspannmodulen
ausgebildet ist.

3. Hydraulisches Spannbackensystem nach Anspruch 1 **dadurch gekennzeichnet,**
**dass** die mit dem Doppel-Spannkeil (1) flächig kontaktierenden zwei beweglichen Keilbacken (2) an ihren Unterseiten jeweils mit zwei Zugfedern (18) funktionsverbunden und relativ zueinander in Spannrichtung hin- und herbeweglich sind.

## Claims

1. Hydraulic clamping jaws system for simultaneous multiple part clamping of identical work pieces between two clamping jaws and at least one intermediate clamping jaw, arranged in form of a vice on base bodies, where one intermediate clamping jaw designed as double-sided, angled jaw actuator wedge (1) with two moving wedge jaws (2) is adjusted and maintained in a constant centre position between fixed clamping jaws (3) on a base body (4), **characterised in**
**that** the double-sided, angled jaw actuator wedge (1) is screwed axially intro the moving piston rod (7) of hydraulic clamping cylinder (6) by means of a clamping screw (5), vertically to the clamping and unclamping motions of the moving clamping jaws (2), and clamped or unclamped with the work pieces,
**that** any of the hydraulic clamping cylinders (6) essentially is designed as single piece consisting of piston (8) and piston rod (7) and is located in a cylinder bore (1)) of base body (4), allowing vertical and pressure-tight motion between end positions and forming thus pressure chambers, and
**that**, when the piston (8) is in a lower, clamped position, the pressure chambers (14) are then functionally and line-connected between them at the upper piston front sides (9), via the pressure chamber oil bores (15) transversally arranged in the base body (4), and
**that** with the hydraulic clamping cylinder (6) in upper position, the lifted double-sided, angled jaw actuator wedge (1) is unlocked and the moving wedge jaws (2) are detached from the work pieces (16), and
**that** piston (8) and piston rod (7) at the lower piston front side (10) are secured against twisting and elastically supported by means of positioner pin (17) and compression spring (13), with regard to a fixed lower cover (12) at the base body.

2. Hydraulic clamping jaws system according to claim 1, **characterised in that** base body (4) optionally is designed as
- clamping strip to hold the clamping jaws in the intermediate clamping jaw
- V-shaped clamping device
- adapter device at clamping and swing clamping modules
respectively.

3. Hydraulic clamping jaws system according to claim 1, **characterised in**
**that** the two moving wedge jaws (2) in close contact with their surfaces to the double-sided, angled jaw actuator wedge (1) have a functional connection at their bottom sides by means of two pull springs (18) each and oscillate relatively to each other in the clamping direction.

## Revendications

1. Système de mâchoires de serrage hydraulique (3) pour le serrage multi-pièces simultané de pièces identiques entre deux mâchoires de serrage et au moins une mâchoire de serrage intermédiaire, arrangé en forme d'étau sur des corps de base, où une mâchoire de serrage intermédiaire configurée en tant que clavette de serrage double (1) avec deux mors coniques mobiles (2) est arrangée sur un corps de base (4) et retenue dans une position constante au milieu de mâchoires de serrage fixes (3), **caractérisé en ce que**
la clavette de serrage double (1) est vissée axialement au moyen d'une vis de serrage (5), verticalement au cours des mouvements de serrage / desserrage des mors coniques mobiles (2), dans la tige de piston mobile (7) du cylindre de serrage hydraulique (6) et est serrée ou desserrée avec ces pièces,
que chacun des cylindres de serrage hydraulique (6) est constitué du piston (8) et de la tige de piston (7) configurés en monobloc et est logé dans un trou cylindrique (11) du corps de base (4) de façon à permettre un mouvement vertical et à l'preuve de la pression entre les deux fins de course tout en formant des chambres de mise en pression et
que les chambres de mise en pression (14), lorsque les pistons (8) se trouvent dans une position inférieure serrée, sont liées entre elles par fonction et conduites aux faces supérieures des pistons (9) par l'intermédiaire des orifices de passage d'huile de la chambre de mise en pression traversant en diagonale le corps de base (4) et
que, dans la position supérieure du cylindre de serrage hydraulique (6), la clavette de serrage double (1) est soulevée et desserrée et les mors coniques mobiles (2) sont détachés des pièces (16) et
que le piston (8) et la tige de piston (7) sont supportés sur la face inférieure du piston (10), de façon élastique et à éviter la torsion, contre un couvercle inférieur fixe (12) prévu au corps de base (4), au moyen d'un positionneur (17) et un ressort de compression (13).

2. Système de mâchoires de serrage hydraulique d'après revendication 1,
**caractérisé en ce que**
le corps de base (4) est configuré en option en tant que
- barre de serrage pour retenir les mâchoires de serrage dans la mâchoire de serrage intermédiaire
- moyen de serrage prismatique
- moyen adaptateur sur des modules de serrage et de serre-tendeurs pivotants.

3. Système de mâchoires de serrage hydraulique d'après revendication 1,
**caractérisé en ce que**
les deux mors coniques mobiles (2) étant en contact avec leurs surfaces avec la clavette de serrage double (1) sont connectés par fonction entre eux chaque fois par l'intermédiaire de deux ressorts de traction (18) de sorte à permettre un mouvement balançant de l'un par rapport à l'autre, dans le sens de serrage.
